# EUROPÄISCHE PATENTSCHRIFT

(11) **EP 2 255 082 B1**
(45) Veröffentlichungstag und Bekanntmachung des Hinweises auf die Patenterteilung: **23.05.2012**
(21) Anmeldenummer: 08872700.3
(22) Anmeldetag: 19.11.2008
(51) Int. Cl.: F02D 41/02, B60W 10/06, B60W 10/08, B60W 20/00, B60W 50/00

(54) **VERFAHREN UND VORRICHTUNG ZUR ANSTEUERUNG EINES ANTRIEBSTRANGS EINES FAHRZEUGS**
METHOD AND DEVICE FOR CONTROLLING A DRIVETRAIN OF A VEHICLE
PROCÉDÉ ET DISPOSITIF POUR COMMANDER UNE CHAÎNE CINÉMATIQUE D UN VÉHICULE

(30) Priorität: 20.02.2008 DE 102008010103
(43) Veröffentlichungstag der Anmeldung: 01.12.2010
(73) Patentinhaber: Robert Bosch GmbH, 70442 Stuttgart (DE)
(72) Erfinder: HEINRICH, Detlef, 71640 Ludwigsburg (DE); WOLL, Christoph, 70839 Gerlingen (DE); FILP, Gerhard, 71691 Freiberg (DE); STAVRIANOS, Dimitrios, 70195 Stuttgart (DE)
(86) Internationale Anmeldenummer: PCT/EP2008/065833
(87) Internationale Veröffentlichungsnummer: WO 2009/103366

(56) Entgegenhaltungen:
- WO-A-2008/039272
- DE-A1-102005 039 316
- FR-A- 2 784 626
- GB-A- 2 326 857
- US-B1- 6 657 315

## Beschreibung

### Stand der Technik

Hybridfahrzeuge verfügen über mindestens zwei Antriebsaggregate. Als Antriebsaggregate werden meist ein Verbrennungsmotor und mindestens eine elektrische Maschine eingesetzt. Es sind jedoch auch alternative Antriebsaggregate, wie Gasmotoren oder Hydraulikmotoren denkbar. Gegenstand dieser Erfindung ist ein Antriebsstrang mit mindestens zwei Antriebsaggregaten wobei das eine ein Verbrennungsmotor sein soll und ein weiterer Motor. Das gesamte Antriebsmoment des Antriebsstrangs setzt sich aus dem Drehmoment des Verbrennungsmotors und des weiteren Motors, insbesondere einer elektrischen Maschine, zusammen.

Aus der DE 10 2005 039 316 ist ein Hybridfahrzeug bekannt und ein entsprechender Antriebsstrang, bei dem die Antriebsaggregate in Abhängigkeit der Abgastemperatur angesteuert werden. Zur stärkeren Belastung, und damit schnelleren Aufheizung des Verbrennungsmotors, wird die elektrische Maschine generatorisch angetrieben. Dadurch wird die Dauer des besonders schadstoffemittierenden Warmlaufbetriebes des Verbrennungsmotors verkürzt. Zum Schutz des Katalysators gegen eine zu hohe thermische Belastung wird im Stand der Technik ein Betrieb des Verbrennungsmotors mit einem angefetteten Motor-Lambda-Wert beschrieben. Es wird ein Luft/Kraftstoffgemisch verwendet, das einen höheren Anteil an Kraftstoff aufweist, als zur Realisierung der geforderten Leistung benötigt wird. Diese Methode zum temperaturmäßigen Schutz des Katalysators wird auch als Bauteilschutz bezeichnet. Die Anfettung des Luft/Kraftstoffgemischs für den Bauteilschutz führt zu einem deutlich höheren Kraftstoffverbrauch, als es für den Betrieb bei der angeforderten Leistung notwendig wäre.

Aus der GB 2 326 857 ist ein gattungsgemäßer Antriebsstrang für ein Fahrzeug mit zwei Antriebsaggregaten, welche beide zum Antrieb des Fahrzeugs beitragen, bekannt. Die Anteile der beiden Antriebsaggregate zum Antrieb des Fahrzeugs werden so gesteuert, dass der Verbrennungsmotor Abgase mit einer gewünschten Abgastemperatur ausstößt. Diese Steuerung der Anteile wird limitiert, damit ein Unterschreiten eines Ladezustands einer Energiespeichereinheit für eines der Antriebsaggregate vermieden wird.

Aufgabe der Erfindung ist, eine Betriebsstrategie für den Fall zur Verfügung zu stellen dass die Energiespeichereinheit für den Motor einen zu geringen Ladezustand aufweist.

### Offenbarung der Erfindung

Das erfindungsgemäße Verfahren und die Vorrichtung mit den Merkmalen der unabhängigen Ansprüche nutzen die Möglichkeiten des Hybridantriebes, um den Katalysator vor zu hohen Temperaturen zu schützen und dabei dennoch möglichst den Kraftstoffverbrauch nicht zu erhöhen. Erfindungsgemäß wird ein Antriebsstrang eines Fahrzeuges, insbesondere eines Hybridfahrzeuges, angesteuert. Der Antriebstrang weist mindestens einen Verbrennungsmotor und mindestens einen weiteren Motor, insbesondere eine elektrische Maschine, zur jeweils teilweisen Erzeugung des Antriebsmomentes auf. Es sind Mittel vorgesehen, die einen die Abgastemperatur des Verbrennungsmotors repräsentierenden Temperaturwert erfassen. In Abhängigkeit der Abgastemperatur wird der Anteil zur Erzeugung des Antriebsmomentes mittels des weiteren Motors variiert. Bei höheren Abgastemperaturen wird ein größerer Anteil des Antriebsmomentes mittels des weiteren Motors erzeugt, als bei geringeren Abgastemperaturen.

Technischer Hintergrund ist, dass ein Katalysator vor zu hohen Abgastemperaturen geschützt werden muss. Insbesondere im Volllastbetrieb erreichen die Abgase ihre höchsten Temperaturen. Mittels einer Reduzierung des angeforderten Drehmomentes durch den Verbrennungsmotors, und bei gleichzeitiger Erhöhung des Drehmomentes der elektrischen Maschine, wird im Hybridfahrzeug der Volllastbetrieb des Verbrennungsmotors vermieden und somit die Abgastemperaturen gesenkt.

Die Vorteile bestehen darin, dass einerseits die Abgastemperaturen gesenkt werden, sodass der Katalysator keinen Schaden erleidet und andererseits der Kraftstoffverbrauch nicht durch ein Anfetten des Luft/Kraftstoffgemisches erhöht wird.

Bei Überschreiten eines Temperaturschwellenwertes wird der Anteil zur Erzeugung des Antriebsmomentes mittels des weiteren Motors erhöht.

Technischer Hintergrund ist, dass bei einer kritischen Temperatur das angeforderte Drehmoment des Verbrennungsmotors reduziert wird damit die Abgastemperatur reduziert wird und das entsprechend reduzierte Moment durch die elektrische Maschine kompensiert wird.

Vorteil ist, dass keine kontinuierliche Regelung notwendig ist, sondern aufgrund einer Überschreitung eines Temperaturschwellenwertes die Erhöhung des Anteiles zur Erzeugung des Antriebsmomentes mittels des weiteren Motors angesteuert wird.

Zusätzlich wird eine Energiespeichereinheit für den Motor betrachtet. Wird der Motor durch eine elektrische Maschine repräsentiert so entspricht diese Energiespeichereinheit einer elektrischen Batterie. Die Erhöhung des Anteiles zur Erzeugung des Antriebsmomentes mittels des weiteren Motors wird nun in Abhängigkeit eines Ladezustands der Energiespeichereinheit durchgeführt.

Technischer Hintergrund ist, dass der Motor durch eine vorhandene Energie gespeist werden muss. Nur wenn der Ladezustand der Energiespeichereinheit ausreichend ist, kann der Motor das angeforderte zusätzliche Moment abgeben.

Vorteil ist, dass der Ladezustand der Speichereinheit berücksichtigt wird.

Die Erfindung ist dadurch gekennzeichnet, dass bei Unterschreitung eines Schwellenwertes des ladezustands der Energiespeichereinheit (211) der Verbrennungsmotor (202) mit einem angefetteten Luft/Kraftstoffgemisch betrieben wird.

Technischer Hintergrund ist, dass mittels einer Abfrage des Ladezustands die Einsatzbereitschaft des weiteren Motors berücksichtigt wird. Wenn das Antriebsmoment des weiteren Motors aufgrund des Ladezustands der Energiespeichereinheit nicht zur Verfügung steht, wird die Temperaturbegrenzung des Abgases durch Anfettung des Luft/Kraftstoffgemisches des Verbrennungsmotors umgesetzt. Es wird ein Luft/Kraftstoffgemisch verwendet, das einen höheren Anteil an Kraftstoff aufweist. Dadurch werden die Abgastemperaturen signifikant verringert.

In einer weiteren Ausgestaltung der Erfindung wird gleichzeitig zur Erhöhung des Anteils zur Erzeugung des Antriebsmomentes mittels des weiteren Motors der Verbrennungsmotor mit einem angefetteten Luft/Kraftstoffgemisch betrieben.

Technischer Hintergrund ist, dass in diesem Fall sowohl der Motor als auch der Verbrennungsmotor zur Begrenzung der Abgastemperatur beitragen.

Vorteil dieser Ausgestaltung ist, dass insbesondere bei einem mittleren oder geringem Ladezustand der Batterie sowohl mittels des weiteren Motors als auch durch Anfettung des Luft/Kraftstoffgemischs zur Begrenzung der Abgastemperatur beigetragen wird, wobei die Erhöhung des Kraftstoffverbrauchs minimiert wird.

In einer weiteren Ausgestaltung der Erfindung wird gleichzeitig zur Erhöhung des Anteils zur Erzeugung des Antriebsmomentes mittels des weiteren Motors der Verbrennungsmotor mit einem magereren Luft/Kraftstoffgemisch betrieben. Für die Erzeugung des magereren Luft/Kraftstoffgemisches wird der Kraftstoffanteil des Luft/Kraftstoffgemisches verringert.

Technischer Hintergrund ist, dass in diesem Fall durch das magerere Luft/Kraftstoffgemisch der Verbrennungsmotor weniger Antriebsmoment abgibt. Dies führt zu einer Abkühlung der Abgastemperatur des Verbrennungsmotors. Das fehlende Antriebsmoment wird durch die Erhöhung des Anteils zur Erzeugung des Antriebsmomentes mittels des weiteren Motors kompensiert. So trägt sowohl der Motor als auch der Verbrennungsmotor zur Begrenzung der Abgastemperatur bei.

Vorteil dieser Ausgestaltung ist, dass insbesondere bei einem mittleren oder geringem Ladezustand der Batterie sowohl mittels des weiteren Motors als auch durch die Reduzierung des Kraftstoffanteils des Luft/Kraftstoffgemischs zur Begrenzung der Abgastemperatur beigetragen wird, wobei die Erhöhung des Kraftstoffverbrauchs minimiert wird.

In einer weiteren Ausgestaltung der Erfindung wird gleichzeitig zur Erhöhung des Anteils zur Erzeugung des Antriebsmomentes mittels des weiteren Motors die Leistung des Verbrennungsmotors mittels einem leistungsbestimmenden Stellglied reduziert. Insbesondere kann das leistungsbestimmende Stellglied bei einem Benzinmotor durch eine Drosselklappe repräsentiert sein. Insbesondere kann das leistungsbestimmende Stellglied beim Dieselmotor durch ein Einspritzventil repräsentiert sein. Aber auch andere leistungsbestimmende Stellglieder für einen Verbrennungsmotor sind einsetzbar. Dadurch wird insbesondere die Füllung im Brennraum reduziert.

Technischer Hintergrund ist, dass in diesem Fall, insbesondre durch eine geringere Füllung im Brennraum, der Verbrennungsmotor weniger Antriebsmoment abgibt. Dies führt zu einer Abkühlung der Abgastemperatur des Verbrennungsmotors. Das fehlende Antriebsmoment wird durch die Erhöhung des Anteils zur Erzeugung des Antriebsmomentes mittels des weiteren Motors kompensiert. So trägt sowohl der Motor als auch der Verbrennungsmotor zur Begrenzung der Abgastemperatur bei.

Vorteil dieser Ausgestaltung ist, dass insbesondere bei einem mittleren oder geringem Ladezustand der Batterie sowohl mittels des weiteren Motors als auch durch die Reduzierung des Kraftstoffanteils des Luft/Kraftstoffgemischs zur Begrenzung der Abgastemperatur beigetragen wird, wobei die Erhöhung des Kraftstoffverbrauchs minimiert wird.

Ausführungsbeispiele der Erfindung sind in den Zeichnungen dargestellt und in der nachfolgenden Beschreibung näher erläutert. Es zeigen
Figur 1 ein Verfahren zur Ansteuerung eines Antriebstrang eines Fahrzeugs.
Figur 2 eine Vorrichtung zur Ansteuerung eines Antriebstrangs eines Fahrzeugs.

### Ausführungsformen der Erfindung:

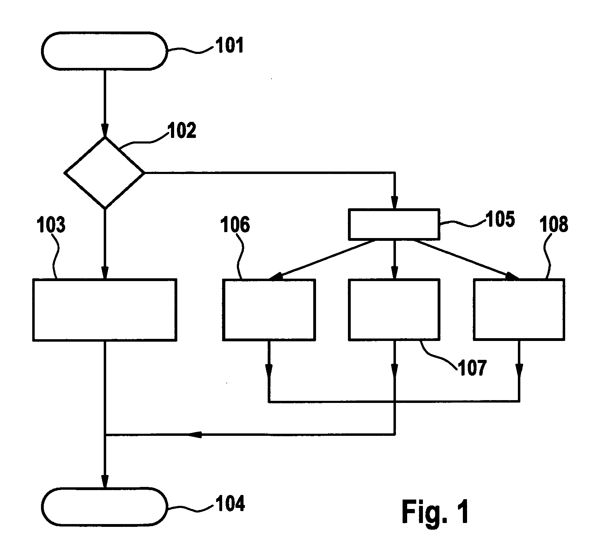

In der Figur 1 ist ein Verfahren zur Ansteuerung eines Antriebstrangs eines Fahrzeugs dargestellt. Das Verfahren beginnt mit dem Schritt 101. In Schritt 102 wird geprüft ob die erfasste Temperatur des Abgases einen Schwellenwert überschreitet. Wird der Schwellenwert nicht überschritten, werden die Antriebsaggregate mit der normalen Betriebsstrategie, wie in Schritt 103 dargestellt, betrieben. In Schritt 104 endet das Verfahren. Wenn in Schritt 102 die Temperatur des Abgases einen Schwellenwert überschreitet verzweigt das Verfahren, um einen weiteren Temperaturanstieg zu verhindern. Im darauffolgenden Schritt 105 wird der Ladezustand der Batterie geprüft, um entscheiden zu können mit welcher weiteren Strategie die Erhöhung der Temperatur des Abgases vermieden werden kann. Wenn der Ladezustand der Batterie in Schritt 105 hoch ist, wird in Schritt 106 der Anteil zur Erzeugung des Antriebsmomentes mittels des weiteren Motors erhöht und somit ein weiterer Anstieg der Temperatur des Abgases verhindert. Weist die Batterie in Schritt 105 einen mittleren Ladezustand auf, so wird in Schritt 107 der Anteil zur Erzeugung des Antriebsmomentes mittels des weiteren Motors etwas erhöht und gleichzeitig der Anteil zur Erzeugung des Antriebsmomentes mittels des Verbrennungsmotors etwas verringert und dieser mit einem fetteren Luft/Kraftstoffgemisch betrieben. Somit wird ebenfalls der weitere Anstieg der Temperatur des Abgases verhindert. Ist der Ladezustand der Batterie in Schritt 105 schwach so wird in Schritt 108 der Anteil zur Erzeugung des Antriebsmomentes mittels des weiteren Motors nicht erhöht und dem Verbrennungsmotor ein fetteres Luft/Kraftstoffgemisch zugeführt. Somit wird auch in diesem Falle der weitere Anstieg der Temperatur des Abgases vermieden. Der darauffolgende Schritt zu den Schritten 106, 107 und 108 ist der Schritt 104 mit dem das Verfahren beendet wird. Durch Wiederholung der Verfahrensschritte wird ein internativer Regelkreis geschaffen. Somit kann die Erhöhung der Temperatur des Abgases auf bauteilschädigende Temperaturen zuverlässig vermieden werden.

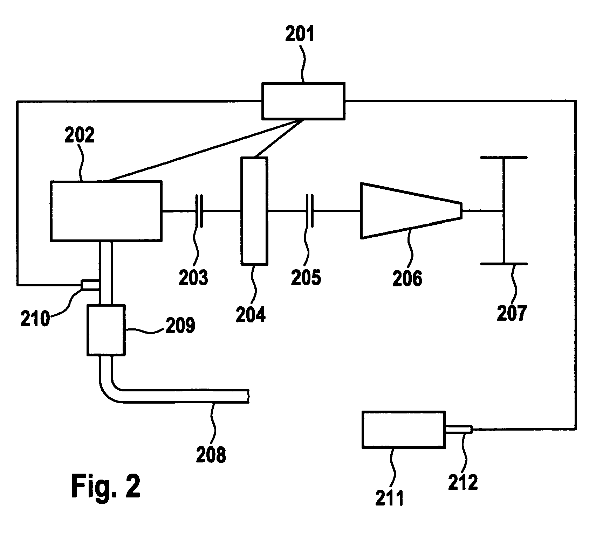

In der Figur 2 ist eine Vorrichtung zur Ansteuerung eines Antriebsstrangs eines Fahrzeugs gezeigt. 202 stellt den Verbrennungsmotor des Antriebsstrangs dar, 204 die elektrische Maschine, 206 das Getriebe und 207 die Antriebsachse mit den Antriebsrädern des Antriebsstrangs des Hybridfahrzeuges. Zwischen Verbrennungsmotor und elektrischer Maschine, sowie zwischen der elektrischen Maschine und dem Getriebe können die Kupplungen 203 und 205 angebracht sein. Der Abgastrakt 208 umfasst einen Katalysator 209 und eine Temperatursensorik 210. Für die elektrische Maschine ist eine Energiespeichereinheit 211 vorgesehen. Mittels des Sensors 212 wird der Ladezustand der Batterie erfasst. Die Vorrichtung 201 steuert in Abhängigkeit der erfassten, und insbesondere mittels Verfahren bewerteten, Signalen der Sensoren 210 und 212 die Antriebsaggregate 202 und 204 an.

## Patentansprüche

1. Verfahren zur Ansteuerung eines AnViebsstrangs eines Fahrzeugs, insbesondere Hybridfahrzeug, mit mindestens einem Verbrennungsmotor (202) und mindestens einem weiteren Motor (204) zur jeweils teilweisen Erzeugung des Antriebsmomentes, wobei ein die Abgastemperatur des Verbrennungsmotor repräsentierender Temperaturwert erfasst wird, damit in Abhängigkeit der Abgastemperatur der Anteil zur Erzeugung des Antriebsmomentes mittels des weiteren Motors (204) derart eingestellt wird, dass bei höheren Abgastemperaturen ein größerer Anteil des Antriebsmomentes mittels des weiteren Motors (204) erzeugt wird als bei geringeren Abgastemperaturen, wobei dem Motor (204) eine Energiespeichereinheit (211) zugeordnet ist und die Erhöhung des Anteiles zur Erzeugung des Antriebsmomentes mittels des weiteren Motors (204) in Abhängigkeit eines Ladezustands der Energiespeichereinheit (211) durchgeführt wird,
**dadurch gekennzeichnet, dass** bei Unterschreitung eines Schwellenwertes des Ladezustands der Energiespeichereinheit (211) der Verbrennungsmotor (202) mit einem angefetteten LufvKraftstoftgemisch betrieben wird.

2. Verfahren nach Anspruch 1, **dadurch gekennzeichnet, dass** bei Überschreiten eines Temperaturschwellenwertes der Anteil zur Erzeugung des Antriebsmomentes mittels des weiteren Motors (204) erhöht wird.

3. Verfahren nach wenigstens einem der oberen Ansprüche, **dadurch gekennzeichnet, dass** der Anteil zur Erzeugung des Antriebsmomentes mittels des weiteren Motors (204) erhöht wird und gleichzeitig der Verbrennungsmotor (202) mit einem angefetteten Luft/Kraftstoffgemisch betrieben wird.

4. Verfahren nach wenigstens einem der oberen Ansprüche, **dadurch gekennzeichnet, dass** der Anteil zur Erzeugung des Antriebsmomentes mittels des weiteren Motors (204) erhöht wird und gleichzeitig der Verbrennungsmotor (202) mit einem magereren Luft/Kraftstoffgemisch betrieben wird.

5. Verfahren nach wenigstens einem der oberen Ansprüche mit einem leistungsbestimmenden Stellglied, **dadurch gekennzeichnet, dass** der Anteil zur Erzeugung des Antriebsmomentes mittels des weiteren Motors (204) erhöht wird und gleichzeitig die Leistung des Verbrennungsmotors (202) mittels einem leistungsbestimmenden Stellglied reduziert wird.

6. Vorrichtung (201) zur Ansteuerung eines Antriebsstrangs eines Fahrzeugs, insbesondere Hybridfahrzeug, mit mindestens einem Verbrennungsmotor (202) und mindestens einem weiteren Motor (204) zur jeweils teilweisen Erzeugung des Antriebsmomentes und einer Temperatursensorik (210) in dem Abgastrakt (208), wobei Mittel vorgesehen sind, die in Abhängigkeit der aktuellen Abgastemperatur den Anteil zur Erzeugung des Antriebsmomentes mittels des weiteren Motors (204) erhöhen,
wobei dem Motor (204) eine Energiespeichereinheit (211) zugeordnet ist und die Erhöhung des Anteiles zur Erzeugung des Antriebsmomentes mittels des weiteren Motors (204) in Abhängigkeit eines Ladezustands der Energiespeichereinheit (211) durchgeführt wird,
**dadurch gekennzeichnet, dass** bei Unterschreitung eines Schwellenwertes des Ladezustands der Energiespeichereinheit (211), der Verbrennungsmotor (202) mit einem angefetteten luftlKraftstoffgemisch betrieben wird.

## Claims

1. Method for controlling a drivetrain of a vehicle, in particular hybrid vehicle, with at least one internal combustion engine (202) and at least one further motor (204) for in each case partially producing the driving torque, wherein a temperature value representing the exhaust-gas temperature of the internal combustion engine is detected so that, depending on the exhaust-gas temperature, the proportion for producing the driving torque by means of the further motor (204) is set in such a manner that, at higher exhaust-gas temperatures, a greater proportion of the driving torque is produced by means of the further motor (204) than at lower exhaust-gas temperatures, wherein the motor (204) is assigned an energy accumulator unit (211) and the proportion for producing the driving torque by means of the further motor (204) is increased depending on a charging state of the energy accumulator unit (211), **characterized in that**, if the value falls below a threshold value of the charging state of the energy accumulator unit (211), the internal combustion engine (202) is operated with an enriched air/fuel mixture.

2. Method according to Claim 1, **characterized in that**, if a temperature threshold value is exceeded, the proportion for producing the driving torque by means of the further motor (204) is increased.

3. Method according to at least one of the preceding claims, **characterized in that** the proportion for producing the driving torque by means of the further motor (204) is increased and at the same time the internal combustion engine (202) is operated with an enriched air/fuel mixture.

4. Method according to at least one of the preceding claims, **characterized in that** the proportion for producing the driving torque by means of the further motor (204) is increased and at the same time the internal combustion engine (202) is operated with a leaner air/fuel mixture.

5. Method according to at least one of the preceding claims with a power-determining setting element, **characterized in that** the proportion for producing the driving torque by means of the further motor (204) is increased and at the same time the power of the internal combustion engine (202) is reduced by means of a power-determining setting element.

6. Device (201) for controlling a drive train of a vehicle, in particular hybrid vehicle, with at least one internal combustion engine (202) and at least one further motor (204) for in each case partially producing the driving torque, and a temperature sensor arrangement (210) in the exhaust-gas tract (208), wherein means are provided which increase the proportion for producing the driving torque by means of the further motor (204) depending on the current exhaust-gas temperature, wherein the motor (204) is assigned an energy accumulator unit (211) and the proportion for producing the driving torque by means of the further motor (204) is increased depending on a charging state of the energy accumulator unit (211), **characterized in that**, if the value falls below a threshold value of the charging state of the energy accumulator unit (211), the internal combustion engine (202) is operated with an enriched air/fuel mixture.

## Revendications

1. Procédé pour commander une chaîne cinématique d'un véhicule, notamment d'un véhicule hybride, comprenant au moins un moteur à combustion interne (202) et au moins un moteur supplémentaire (204) pour générer à chaque fois en partie le couple d'entraînement, une valeur de température représentant la température des gaz d'échappement du moteur à combustion interne étant détectée, afin que la proportion pour générer le couple d'entraînement au moyen du moteur supplémentaire (204) soit ajustée en fonction de la température des gaz d'échappement de telle sorte que pour des températures de gaz d'échappement plus élevées, une plus grande proportion du couple d'entraînement soit générée au moyen du moteur supplémentaire (204) que pour des températures de gaz d'échappement plus basses, une unité d'accumulation d'énergie (211) étant associée au moteur (204) et l'augmentation de la proportion pour générer le couple d'entraînement au moyen du moteur supplémentaire (204) étant effectuée en fonction d'un état de charge de l'unité d'accumulation d'énergie (211),
**caractérisé en ce qu'**en dessous d'une valeur seuil de l'état de charge de l'unité d'accumulation d'énergie (211), le moteur à combustion interne (202) est entraîné avec un mélange air-carburant enrichi.

2. Procédé selon la revendication 1, **caractérisé en ce que** dans le cas d'un dépassement d'une valeur seuil de température, la proportion pour la génération du couple d'entraînement est augmentée au moyen du moteur supplémentaire (204).

3. Procédé selon au moins l'une quelconque des revendications précédentes, **caractérisé en ce que** la proportion pour générer le couple d'entraînement au moyen du moteur supplémentaire (204) est augmentée et en même temps le moteur à combustion interne (202) est entraîné avec un mélange air-carburant enrichi.

4. Procédé selon au moins l'une quelconque des revendications précédentes, **caractérisé en ce que** la proportion pour générer le couple d'entraînement au moyen du moteur supplémentaire (204) est augmentée et en même temps le moteur à combustion interne (202) est entraîné avec un mélange air-carburant plus pauvre.

5. Procédé selon au moins l'une quelconque des revendications précédentes, comprenant un actionneur déterminant la puissance, **caractérisé en ce que** la proportion pour générer le couple d'entraînement au moyen du moteur supplémentaire (204) est augmentée et en même temps la puissance du moteur à combustion interne (202) est réduite au moyen d'un actionneur déterminant la puissance.

6. Dispositif (201) pour commander une chaîne cinématique d'un véhicule, en particulier d'un véhicule hybride, comprenant au moins un moteur à combustion interne (202) et au moins un moteur supplémentaire (204) pour générer à chaque fois en partie le couple d'entraînement et un capteur de température (210) dans le système d'échappement (208), des moyens étant prévus pour augmenter la proportion pour générer le couple d'entraînement au moyen du moteur supplémentaire (204) en fonction de la température des gaz d'échappement actuelle, une unité d'accumulation d'énergie (211) étant associée au moteur (204) et l'augmentation de la proportion pour générer le couple d'entraînement au moyen du moteur supplémentaire (204) étant effectuée en fonction d'un état de charge de l'unité d'accumulation d'énergie (211), **caractérisé en ce qu'**en dessous d'une valeur seuil de l'état de charge de l'unité d'accumulation d'énergie (211), le moteur à combustion interne (202) est entraîné avec un mélange air-carburant enrichi.
